# NEUE EUROPÄISCHE PATENTSCHRIFT

(11) **EP 1 152 166 B2**
(45) Veröffentlichungstag und Bekanntmachung des Hinweises auf die Entscheidung über den Einspruch: **28.04.2010**
(45) Hinweis auf die Patenterteilung: 20.10.2004
(21) Anmeldenummer: 01101597.1
(22) Anmeldetag: 17.03.2001
(51) Int. Cl.: F16F 9/50

(54) **Stossdämpfer mit amplitudenabhängiger Dämpfung**
Shock absorber with amplitude-dependent damping
Amortisseur de chocs avec amortissement dépendant de l'amplitude

(30) Priorität: 04.05.2000 DE 10021767; 27.09.2000 DE 10047878
(43) Veröffentlichungstag der Anmeldung: 07.11.2001
(73) Patentinhaber: ThyssenKrupp Bilstein GmbH, 58256 Ennepetal (DE)
(72) Erfinder: Götz, Ole, Dipl.-Ing., 21075 Hamburg (DE)
(74) Vertreter: Albrecht, Rainer Harald

(56) Entgegenhaltungen:
- DE-A- 2 426 326
- DE-A1- 2 323 362
- DE-A1- 19 612 153
- DE-C1- 4 002 882
- FR-A1- 2 425 585
- FR-A5- 2 070 461

## Beschreibung

Die Erfindung betrifft eine Einrichtung zur amplitudenabhängigen Dämpfung von Stößen, insbesondere eines Fahrzeugrades, mit mindestens einem innerhalb eines Dämpfergehäuses angeordneten, mit einer Kolbenstange verbundenen, das Dämpfergehäuse in zwei Dämpfungsräume teilenden Arbeitskolben, der mit einem hydraulisch parallel angeordneten Element zur Beeinflussung kleinerer Amplituden zusammenwirkt.

In der Regel ist die Bewegung der Kolbenstange für kleinere Amplituden eher schwach gedämpft, wobei sich die Größe der Dämpfung in der Regel nur über die Widerstände der Strömungskanäle beeinflussen läßt.

Die EP-A 0 848 182 beinhaltet einen Stoßdämpfer für Fahrzeugräder, der mit einem Element zur Beeinflussung kleiner Amplituden eines Fahrzeugrades zusammenwirkt. In der EP-A 0 848 182 wird nun eine Lösung vorgeschlagen, bei welcher u.a. im Bereich des Arbeitskolbens ein Dämpfungselement aus Elastomermaterial vorgesehen ist, das innerhalb eines im Bereich der inneren Umfangsfläche vorgesehenen Raumes angeordnet ist und kleinere Radstöße aufnimmt. Über Flüssigkeitskanäle steht das Dämpfungselement, das vorzugsweise als Ring ausgebildet ist, zum einen mit dem oberen und zum anderen mit dem unteren Dämpfungsraum in Wirkverbindung. Scheibenventile begrenzen die beiden Stirnflächen des Arbeitskolbens. Im Falle geringer Stöße kann Hydraulikmedium von oben bzw. unten in Richtung des Dämpfungselementes strömen und somit kleinere Amplituden ohne wesentliche Dämpfung ausgleichen. Im Falle größerer Strömungen kommen die Scheibenventile in bekannter Weise zum Einsatz. Nachteilig ist hier festzustellen, daß der Arbeitskolben in aufwendiger Weise bearbeitet werden muß, um den ringförmigen elastischen Körper aufzunehmen, wobei auch die Zu- und Abflußkanäle nachträglich mechanisch eingebracht werden müssen.

Das Gleiche gilt für eine Einrichtung nach dem nächstliegenden Stand der Technik, der FR 2 425 585 A. Bei dieser Einrichtung ist die Membran in einem zylindrisch ausgebildeten Ausgleichsraum angeordnet.

Der Erfindung liegt die Aufgabe zugrunde, den aus dem Stand der Technik bekannten Stoßdämpfer dergestalt weiterzubilden, daß der Arbeitskolben selber in seiner Bauform nicht verändert und eine kurze Bauweise ermöglicht wird.

Diese Aufgabe wird durch die Merkmale des Anspruchs 1 gelöst.

Vorteilhafte Aus- und Weiterbildungen des Erfindungsgegenstandes sind den Unteransprüchen zu entnehmen.

Nach einem Merkmal des Erfindungsgegenstandes wird ein durch eine axial verschiebliche feste Scheibe geteilter Raum vorgeschlagen, der parallel zum Stoßdämpfer hydraulisch mit dem oberen und/oder unteren Dämpfungsraum verbunden ist. Die durch die verschiebliche feste Scheibe erzeugten Raumbereiche sind derartig ausgelegt, daß sie vom Hydraulikmedium des zugehörigen Dämpfungsraumes angeströmt werden können. Von daher ist es nun möglich, daß der jeweilige durch die verschiebliche feste Scheibe getrennte Zusatzraum außerhalb des Arbeitskolbens als Ausgleichsraum für geringe Stoßdämpferbewegungen fungieren kann. Der jeweilige Ausgleichsraum (geteilter Raumbereich) kann von oben oder von unten ohne wesentliche Dämpfung mit Hydrauliköl gefüllt werden bis die verschiebliche feste Scheibe sich an einer der beiden gegenüberliegenden Wände des jeweiligen Raumbereiches anlegt. Durch diese Maßnahme wird eine relativ ungedämpfte Bewegung im Bereich kleiner Amplituden erzielt. Erst nach Ausschöpfung dieser geringen Wege setzt die eigentliche Dämpfung, wie bereits im Stand der Technik beschrieben, nämlich über die bekannten Ventilscheiben ein.

Über die Geometrie des jeweiligen geteilten Raumbereiches, der Einbauteile und der Zuströmöffnungen läßt sich das Verhalten im Übergangsbereich zur härteren Dämpfung variieren, so daß sich ein weicher Übergang erreichen läßt.

Die Fig. 1 und 2 zeigen nicht zur Erfindung gehörende Ausführungsformen eines Stossdämpfers mit Arbeitskolben und Element zur Beeinflussung kleiner Amplituden. Der Erfindungsgegenstand ist anhand eines Ausführungsbeispiels in den Fig. 3 und 4 dargestellt und wird wie folgt erläutert. Es zeigen:
- Fig. 3: Prinzipskizze in Analogie zu Fig. 1 mit einem erfindungsgemäss gestalteten Element zur Beeinflussung kleiner Amplituden;
- Fig. 4: Prinzipskizze in Analogie zu Fig. 1 mit einem gegenüber Fig. 3 anders gestalteten erfindungsgemässen Element zur Beeinflussung kleiner Amplituden.

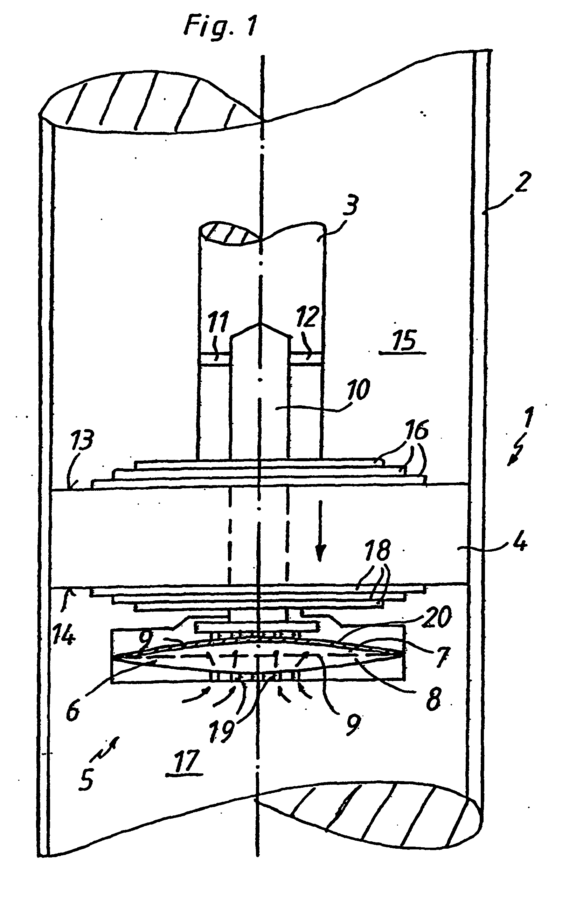

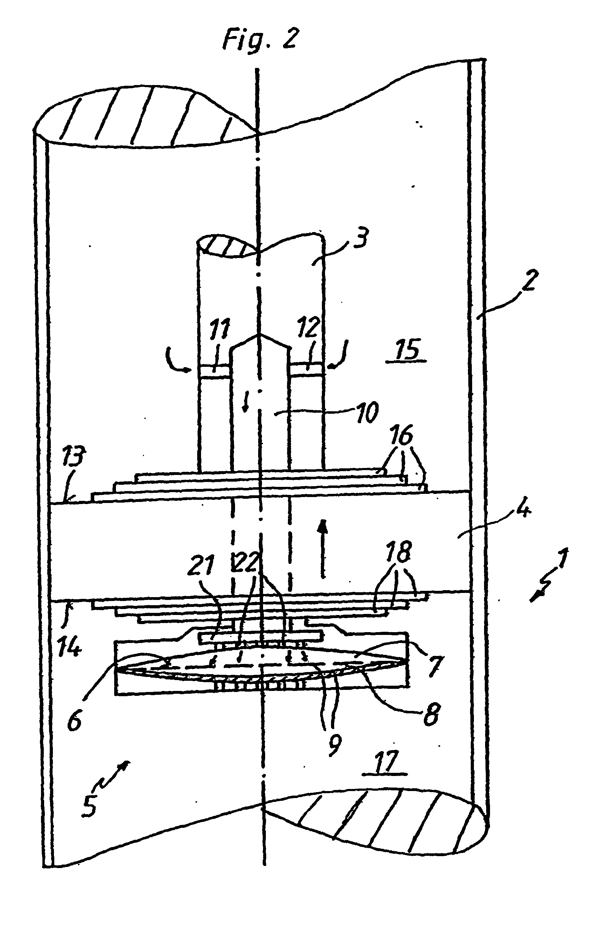

Die Figuren 1 und 2 zeigen nicht zur beanspruchten Erfindung gehörende, Beispiele, die das Verständnis der Erfindung erleichtern. Die Einrichtung 1, in diesem Beispiel dargestellt als Einrohrdämpfer, wobei jedoch auch Zweirohrdämpfer in gleicher Weise zum Einsatz gelangen können. Die Einrichtung 1 beinhaltet ein rohrförmiges Dämpfergehäuse 2, innerhalb dessen ein mit einer Kolbenstange 3 zusammenwirkender Arbeitskolben 4 angeordnet ist. Ferner ist ein Element 5 zur Dämpfung kleinerer Amplituden vorgesehen. Das Element 5 wird gebildet durch eine einen Raum 6 in zwei Raumbereiche 7,8 unterteilende Membran 9, die gestrichelt in ihrer Mittelposition angedeutet ist. Die Kolbenstange 3 ist mit einer Sacklochbohrung 10 versehen, in welche von der äußeren Umfangsfläche derselben radial nach innen verlaufende Bohrungen 11,12 einlaufen. Der Arbeitskolben 4 weist eine obere Stirnfläche 13 sowie eine untere Stirnfläche 14 auf und wirkt im Bereich des oberen Dämpfungsraumes 15 mit mehreren, ein Ventil bildenden Ventilscheiben 16 zusammen. Ein gleichartiges Ventil ist im unteren Dämpfungsraum 17 vorgesehen, das ebenfalls aus mehreren Ventilscheiben 18 gebildet ist.

Figur 1 zeigt den Abwärtshub des Arbeitskolbens 4, und zwar im Bereich kleiner Amplituden, d.h. geringer Auslenkungen des Arbeitskolbens 4. Beim Abwärtshub wird das im unteren Dämpfungsraum 17 vorhandene Hydrauliköl durch siebartig im Element 5 vorhandene Öffnungen 19 in den Raumbereich 8 geleitet, wodurch die gestrichelt dargestellte, in diesem Beispiel aus Elastomer bestehende Membran 9 in Richtung der gegenüberliegenden, gekrümmt ausgebildeten Wand 20 elastisch verformt wird. Erst wenn die Membran 9, so wie in Figur 1 dargestellt, an der Wand 20 zur Anlage kommt, wird die weitere Dämpfung, in an sich bekannter Weise, durch die Ventilscheiben 18 des Ventiles übernommen.

Figur 2 zeigt nun den Aufwärtshub des Arbeitskolbens 4, wobei für gleiche Bauteile gleiche Bezugszeichen Gültigkeit haben.

Beim Aufwärtshub des Arbeitskolbens 4 wird das im oberen Dämpfungsraum 15 vorhandene Hydraulikmedium über die Bohrungen 11, 12 in die Sacklochbohrung 10 verdrängt, wobei das Hydraulikmedium in den Ringraum 21 des Elementes 5 gelangt. Auch hier sind siebartig ausgebildete Durchgangsöffnungen 22 vom Ringraum 21 in Richtung des Raumes 6, insbesondere des Raumbereiches 7, gegeben. Im Falle geringer Auslenkungen des Arbeitskolbens 4 nach oben beaufschlagt das verdrängte Hydraulikmedium die gestrichelt dargestellte Membran 9, die dann elastisch in Richtung der gegenüberliegenden Wand 23 des Raumbereiches 8 verformt wird. Auch hier ist die Anlage der Membran 9 an der Wand 23 dargestellt, wobei in dieser Situation der herkömmliche Dämpfungsvorgang eingeleitet wird.

Über die Geometrie des Raumes 6 bzw. der Wandbereiche 20, 23, die Steifigkeit der Membran 9 sowie die Anordnung der Sieblöcher 19, 22 läßt sich das Verhalten im Übergangsbereich zur härteren Dämpfung variieren, so daß sich durch den Erfindungsgegenstand ein weicher Übergang realisieren läßt. Dies im Hinblick darauf, daß die Membran 9 bei Auslenkung in Richtung des jeweiligen Wandbereiches 20 oder 23 die siebartigen Öffnungen 19 oder 22 nicht schlagartig sondern bereichsweise verschließt.

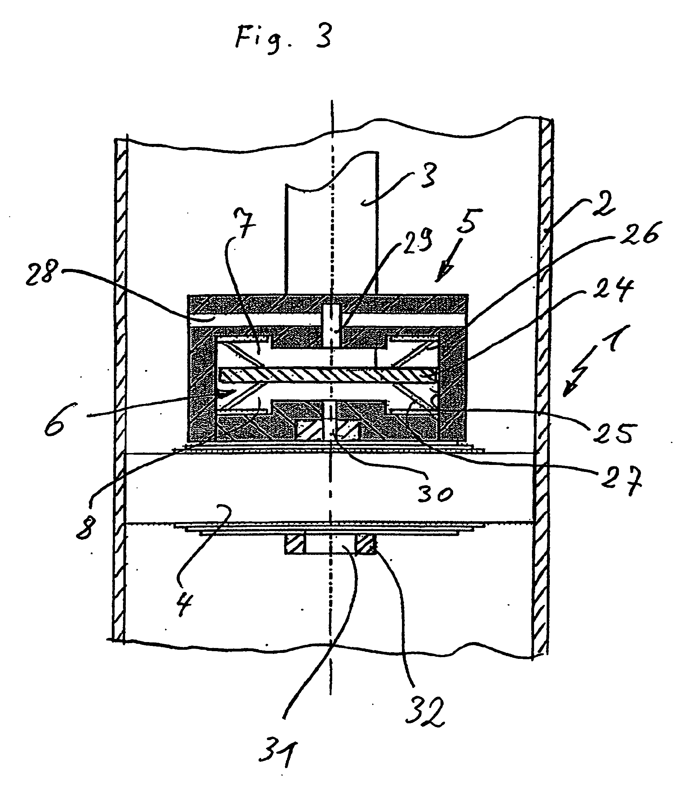

In Figur 3 ist eine erfindungsgemäße Einrichtung 1 gezeigt, wobei das Element 5 zur Beeinflussung kleiner Amplituden zwischen Kolbenstange 3 und Arbeitskolben 4 angeordnet, also im oberen Dämpfungsraum 15. Bei dem in Figur 3 dargestellten Element 5 wird der Raum 6 durch eine axial verschiebliche Scheibe 24 in zwei Raumbereiche 7, 8 unterteilt. Die Scheibe 24 ist am Umfang gegenüber dem Mantel 25 des zylindrisch ausgebildeten Raumes 6 abgedichtet. Federn 26, 27, im Ausführungsbeispiel Flachformfedern, halten die Scheibe 24 bei ausgeglichenem Druck zwischen Raumbereich 7 und Raumbereich 8 in der Mittellage. Bei unterschiedlichem Druck verschiebt sich die Scheibe 24 axial.

Der obere Raumbereich 7 ist über Bohrungen 28, 29 mit dem oberen Dämpfungsraum 15 hydraulisch verbunden, der untere Raumbereich 8 über die Bohrungen 30, 31 mit dem unteren Dämpfungsraum 17. Eine mit der zentralen Bohrung 31 versehene Befestigungsschraube 32 dient zum Anbinden des Arbeitskolbens 4 an das Element 5, welches wiederum in bekannter Weise, beispielsweise durch Verschrauben an der Kolbenstange 3, befestigt ist. Die in Figur 3 gezeigte Ausbildungsform, bei der das Element 5 zur Beeinflussung kleiner Amplituden zwischen Kolbenstange 3 und Arbeitskolben 4 angeordnet ist, ermöglicht eine kurze Bauweise, vorzugsweise bei einem Einrohrstoßdämpfer.

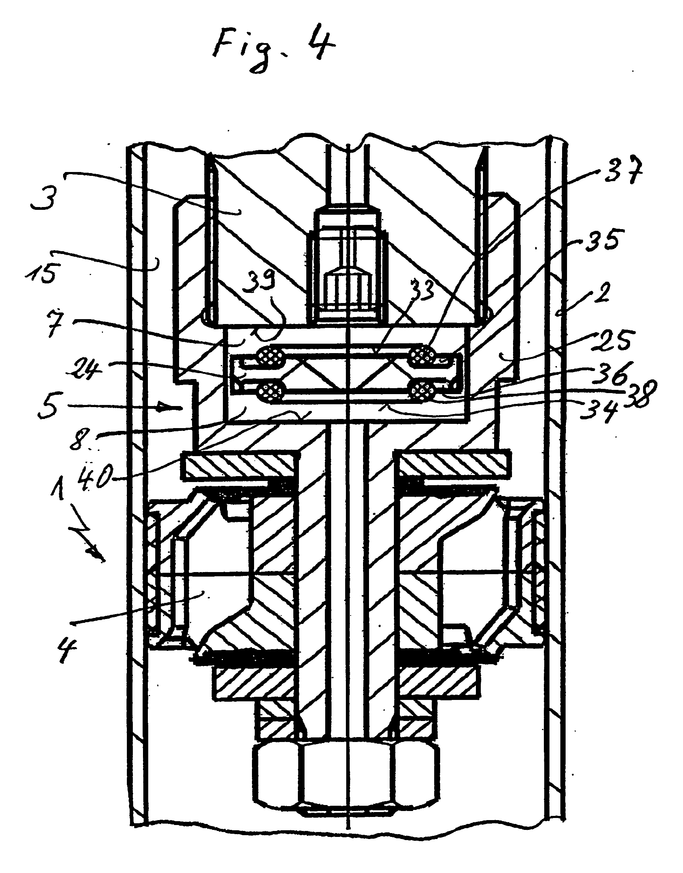

In der Figur 4 ist das Element 5 zur Beeinflussung kleiner Amplituden wiederum zwischen Kolbenstange 3 und Arbeitskolben 4 angeordnet dargestellt, also im oberen Dämpfungsraum 15. Der Raum 6 wird wiederum durch eine axial verschiebliche Scheibe 24 in zwei Raumbereiche 7, 8 unterteilt. Die Scheibe 24 ist am Umfang gegenüber dem Mantel 25 des zylindrisch ausgebildeten Raumes nicht abgedichtet. Bei dieser Ausbildung wird ein geringer Ringspalt zugelassen. Das hat den Vorteil, dass sich unter der Scheibe 24 eventuell ansammelnde Gasblasen durch den Ringspalt nach oben steigen können, was eine sichere Funktion des Elements 5 erst ermöglicht.

Bei der in Figur 4 dargestellten Ausbildung wird auf Federn zur Höhenzentrierung der Scheibe 24 verzichtet. Es wird davon ausgegangen, daß sich die mittige Höhenlage der Scheibe 24 im laufenden Fahrbetrieb von alleine einstellt.

Die in Figur 4 dargestellte Scheibe 24 weist an beiden Stirnflächen 33, 34 ringförmig umlaufende Nuten 35, 36 auf. Die Breite dieser Nuten 35, 36 ist größer als ihre Höhe. In die Nuten sind elastisch nachgiebige Ringe 37, 38 eingelegt. Diese Ringe 37, 38 können mit der Scheibe 24 verklebt oder vulkanisiert sein. Sie überragen die jeweiligen Stirnflächen 33, 34. Bei Anlage der Scheibe 24 mit ihrer jeweiligen Stirnfläche 33, 34 an eine der Bodenflächen 39, 40 des Raumes 6 mit höchstmöglicher Anlagekraft verformen sich die elastisch nachgiebigen Ringe 37, 38 soweit, daß sie die jeweilige Nut 35, 36 vollständig oder nahezu vollständig füllen. Dadurch wird eine Spannung zwischen der jeweiligen Stirnfläche 33, 34 und der zugehörigen Bodenfläche 39, 40 erzielt, die dazu führt, daß sich bei nachlassendem hydraulischem Druck die Scheibe 24 wieder von der Bodenfläche 39, 40 löst und möglichst sogar in die vorgesehene Mittelstellung beschleunigt wird. Durch die Ausbildung von Nuten 35, 36 und Ringen 37, 38 kann ein weicher Anlauf der Scheibe 24 gegen die Bodenflächen 39, 40 gestaltet werden.

Es ist auch denkbar, daß die Ringe 37, 38 einteilig, beispielsweise in Form von Lippen, die sich in die Nuten 35, 36 biegen lassen, ausgebildet werden. Scheibe 24 und Ringe 37, 38 sind vorzugsweise aus Kunststoff hergestellt.

Um ein Kleben der Scheibe 24 an den Bodenflächen 39, 40 zu verhindern, kann außerdem vorgesehen werden, daß die Stirnflächen 33, 34 der Scheibe 24 und/oder die Bodenflächen 39, 40 des Raums 6 uneben ausgebildet werden. Vorzugsweise werden diese Flächen mit radial verlaufenden Vertiefungen ausgebildet.

Sofern eine sichere Ausgangspositionierung der Scheibe 24 in der Mitte des Raums 6 gewährleistet werden muß, kann dieses auch bei der Ausbildung nach Figur 4 durch das Verwenden von Federn 26, 27 erreicht werden, wie dieses in Figur 3 gezeigt ist.

### Bezugszeichenliste

- 1.: Einrichtung
- 2.: Dämpfergehäuse
- 3.: Kolbenstange
- 4.: Arbeitskolben
- 5.: Element
- 6.: Raum
- 7.: Raumbereich
- 8.: Raumbereich
- 9.: Membran
- 10.: Sacklochbohrung
- 11.: Bohrung
- 12.: Bohrung
- 13.: Stirnfläche
- 14.: Stirnfläche
- 15.: Dämpfungsraum
- 16.: Ventilscheiben
- 17.: Dämpfungsraum
- 18.: Ventilscheiben
- 19.: Öffnungen
- 20.: Wand
- 21.: Ringraum
- 22.: Durchgangsöffnung
- 23.: Wand
- 24.: Scheibe
- 25.: Mantel
- 26.: Feder
- 27.: Feder
- 28.: Bohrung
- 29.: Bohrung
- 30.: Bohrung
- 31.: Bohrung
- 32.: Befestigungsschraube
- 33.: Stirnfläche
- 34.: Stirnfläche
- 35.: Nut
- 36.: Nut
- 37.: Ring
- 38.: Ring
- 39.: Bodenfläche
- 40.: Bodenfläche

## Patentansprüche

1. Einrichtung zur amplitudenabhängigen Dämpfung von Stößen, insbesondere eines Fahrzeugrades, mit mindestens einem innerhalb eines mit hydraulischem Fluid gefüllten Dämpfungsgehäuses (2) angeordneten, mit einer Kolbenstange (3) verbundenen, das Dämpfungsgehäuse (2) in einen oberen Dämpfungsraum (15) und einen unteren Dämpfungsraum (17) aufteilenden Arbeitskolben (4), der mit einem hydraulisch zum Arbeitskolben parallel in einem der Dämpfungsräume (15, 17) angeordneten Element (5) zusammenwirkt,
wobei das Element (5) zur Beeinflussung kleiner Amplituden einen zusätzlichen zylindrischen Raum (6) als Ausgleichsraum für geringe Stoßdämpferbewegungen aufweist, der abgesehen von als hydraulische Verbindungen dienenden Bohrungen (29, 30) zum oberen (15) und unteren Dämpfungsraum (17) geschlossen ist und über ein Trennelement in zwei Raumbereiche (7, 8) geteilt ist,
wobei erst nach der Anlage des Trennelementes (24) an eine der beiden gegenüber liegenden Wänden des Raumes (6) die Dämpfung über den Arbeitskolben (4) einsetzt,
**dadurch gekennzeichnet, dass** das Trennelement beweglich und als axial verschiebliche feste Scheibe (24) ausgebildet ist, dass der Arbeitskolben (4) mit mehreren Ventilscheiben (16, 18) zusammenwirkt und dass das Element (5) zwischen der Kolbenstange (3) und dem Arbeitskolben (4) angeordnet ist.

2. Einrichtung nach Anspruch 1, **dadurch gekennzeichnet, dass** die Scheibe (24) an ihrem Umfang gegenüber dem Mantel (25) des Raumes (6) abgedichtet ist.

3. Einrichtung nach Anspruch 1 oder 2, **dadurch gekennzeichnet, dass** die Scheibe (24) beidseitig axial über Federn (26, 27) im Raum (6) gehalten wird.

4. Einrichtung nach einem der Ansprüche 1 bis 3, **dadurch gekennzeichnet, dass** das Element (5) mit einem Gewinde zum Anbinden an die Kolbenstange (3) und den Arbeitskolben (4) ausgebildet ist.

## Claims

1. Device for amplitude-dependent damping of shocks, in particular of a vehicle wheel, having at least one working piston (4) which is disposed inside a damping housing (2) filled with hydraulic fluid, is connected to a piston rod (3) and divides the damping housing (2) into an upper damping chamber (15) and a lower damping chamber (17), and which working piston cooperates with an element (5), which is disposed hydraulically in parallel with the working piston in one of the damping chambers (15, 17),
wherein the element (5) for influencing small amplitudes has an additional chamber (6) as a compensating chamber for small shock absorber movements, which chamber is closed with respect to the upper (15) and lower damping chamber (17) apart from bores (29, 30) serving as hydraulic connections, and which compensating chamber is divided into two chamber regions (7, 8) by means of a separating element,
wherein damping is initiated via the working piston (4) only after the separating element (24) comes into position on one of the two opposite walls of the chamber (6),
**characterised in that** the separating element is moveable and formed as an axially displaceable solid disc (24), that the working piston (4) cooperates with a plurality of valve discs (16, 18) and that the element (5) is disposed between the piston rod (3) and the working piston (4).

2. Device as claimed in claim 1, **characterised in that** the disc (24) is sealed at its periphery with respect to the surface (25) of the chamber (6).

3. Device as claimed in claim 1 or claim 2, **characterised in that** the disc (24) is held in the chamber (6) axially on both sides by springs (26, 27).

4. Device as claimed in any one of claims 1 to 3, **characterised in that** the element (5) is formed with a thread for attachment to the piston rod (3) and to the working piston (4).

## Revendications

1. Dispositif pour un amortissement de chocs, dépendant de l'amplitude, en particulier pour une roue de véhicule, comprenant au moins un piston actif (4), agencé dans un carter d'amortissement (2) rempli d'un fluide hydraulique, relié à une tige de piston (3), divisant le carter d'amortissement (2) en une chambre d'amortissement supérieure (15) et une chambre d'amortissement inférieure (17), qui coopère avec un élément (5) agencé hydrauliquement en parallèle par rapport au piston actif dans l'une des chambres d'amortissement (15, 17),
l'élément (5) présentant, pour une action pour les faibles amplitudes, une chambre additionnelle (6) cylindrique, servant de chambre de compensation pour de faibles mouvements d'amortissement de chocs, qui est fermée à l'exclusion d'alésages (29, 30) servant de liaisons hydrauliques vers la chambre d'amortissement supérieure (15) et la chambre d'amortissement inférieure (17) et est divisée en deux portions de chambre (7, 8) par un élément de séparation,
l'amortissement par l'intermédiaire du piston actif (4) ne débutant qu'après l'entrée en contact de l'élément de séparation (24) avec l'une des deux parois opposées de la chambre (6),
**caractérisé en ce que** l'élément de séparation est réalisé mobile et sous la forme d'un disque (24) rigide, mobile axialement, **en ce que** le piston actif (4) coopère avec plusieurs disques de clapets (16, 18) et **en ce que** l'élément (5) est agencé entre la tige de piston (3) et le piston actif (4).

2. Dispositif selon la revendication 1, **caractérisé en ce que** le disque (24) est étanchéifié à sa périphérie, vis-à-vis de la chemise (25) de la chambre (6).

3. Dispositif selon la revendication 1 ou 2, **caractérisé en ce que** le disque (24) est maintenu axialement dans la chambre (6), de part et d'autre par des ressorts (26, 27).

4. Dispositif selon l'une quelconque des revendications 1 à 3, **caractérisé en ce que** l'élément (5) est réalisé avec un filet pour sa fixation à la tige de piston (3) et au piston actif (4).
